# EUROPEAN PATENT SPECIFICATION

(11) **EP 0 792 208 B1**
(45) Date of publication and mention of the grant of the patent: **11.09.2002**
(21) Application number: 95904060.1
(22) Date of filing: 14.11.1994
(51) Int. Cl.: B29C 65/20, F16L 41/00, B29C 65/00, B32B 31/00

(54) **APPARATUS AND METHOD FOR DOWN HOLE FUSING**
VORRICHTUNG UND VERFAHREN ZUM AUSFÜHREN VON VERSCHWEISSUNGEN AUF DEM BODEN EINES LOCHES
APPAREIL ET PROCEDE PERMETTANT DE REALISER UN RACCORDEMENT PAR FUSION AU FOND D'UN TROU

(43) Date of publication of application: 03.09.1997
(73) Proprietor: T T I TRENCHLESS TECHNOLOGIES, INC., Conroe, TX 77301 (US)
(72) Inventor: REBER, Cleve, C., Pasadena, TX 77503 (US); MEYERS, Kurt, S., Houston, TX 77071 (US)
(74) Representative: Ebner von Eschenbach, Jennifer
(86) International application number: PCT/US94/13036
(87) International publication number: WO 96/014976

(56) References cited:
- FR-A- 2 648 538
- US-A- 3 958 593
- US-A- 3 966 528
- US-A- 4 036 514
- US-A- 4 519 124
- US-A- 4 533 424
- US-A- 4 556 207
- US-A- 4 832 069
- US-A- 4 869 619

## Description

### Field of the Invention

The present invention is directed to an apparatus and method for down hole fusing to make connections to utility pipe. More specifically, the apparatus and method are directed to providing connections to a utility pipe, such as a water or sewer line of polyethylene pipe which may be new or replacement pipe for existing lines, and includes fusing a polyolefin service connection to the new pipe.

### Background of the Invention

The use of polyolefin pipe in the utility industry has become commonplace. The current accepted pipe is polyethylene pipe. Currently there are two basic methods used to repair existing lines such as broken sewer lines made of concrete or tile with polyethylene pipe. One is called slip lining which is pulling a smaller polyethylene pipe through an existing pipe. The other is a method which breaks the existing pipe and at the same time pulls in a polyethylene pipe. This latter method can maintain the pipe diameter at the same internal diameter with the replacing polyethylene pipe as was present in the broken pipe. These methods are being used by cities and municipalities to fix the infrastructure of their waste water systems. These projects are carried out on the city or municipality easements. However, both methods now require that the service connection, i.e. the connections from a house or business (the line or pipe on private property) be carried out usually in a pit which is 5 feet (5') to 12 feet (12') deep. Often these pits are in the backyards of person's homes and to allow sufficient room for a man to enter the pit, as many as 5 to 8 yards of dirt must be removed and stored. The available connectors for connecting the service connection or line to the new polyethylene pipe are saddles which are held onto the new polyethylene pipe by clamps. The clamps are very similar to the clamps used on hoses in a car but having much greater diameters since the lines are 20 to 30 cm (about 8 to 12 inches) in diameter. To the saddle connectors clamped to the new polyethylene pipe are a variety of polyvinylchloride (PVC) pieces which are connected to the service or private line to complete the service connection.

The problems with the current methods of making the service connections are many. They include the need to excavate large amounts of dirt to get to the site of the connection, disposal of the large amount of dirt removed and the pit needs to be shored to meet OSHA standards for working at levels greater than 1.5m. (about 5 feet deep). The use of saddles and clamps requires that access be obtained completely around the new polyethylene pipe and clamps cannot completely seal the saddle to prevent infusion of water which is passing on the outside of the polyethylene pipe, the intrusion of roots and the chance that the saddle is moved or disturbed during refilling the pit. Any one of these problems can make the connection a major and costly problem; collectively, these are each overcome by the apparatus and method of the present invention.

US-A-4978255 discloses a method for tapping a ferrous pipe through a saddle adhered to the surface of the pipe by an adhesive, the saddle having a closure member which prevents the adhesive entering the bore.

The closest prior art US-A-4832069 relates to an apparatus for tapping an underground pipe under pressure which includes adhesively securing a saddle to the pipe, the saddle including an aperture through which the tapping is made.

The patents are all related to methods used either with water or gas utility lines.

### Summary of the Invention

The present invention provides a down hole apparatus for joining a polyolefin stack to a polyolefin pipe according to claim 1.

In addition, the present invention provides a method for making a service connection to polyethylene replacement sewer pipe for connection to a service line which comprises: (1) locating said service line; (2) excavating an opening smaller than a man can enter from the surface to the polyethylene replacement pipe at said service line; characterized by (3) introducing a heat fusing apparatus on top of the polyethylene pipe and fusing a stack to the polyethylene pipe; and (4) drilling an opening into the polyethylene pipe through the fused stack.

### Brief Description of the drawings

Fig. 1 to Fig. 6 schematically illustrate the steps of the method of making a service connection to a polyethylene pipe:
Fig. 1 illustrates the locating and excavating steps;
Fig. 2 illustrates the introduction of the fusing apparatus onto the top of tne polyethylene pipe and positioning the stack in preparation for fusing;
Fig. 3 illustrates the fusing apparatus with the heating element raised in a side view in relation to the polyethylene pipe and the stack positioned before fusing;
Fig. 4 illustrates the heating element on top of the polyethylene pipe and the stack on the top surface of the heating element in preparation for fusing;
Fig. 5 illustrates the completion of the fusing of the stack to the polyethylene pipe with the heating element of the fusing apparatus retracted for removal and the testing of the stack to make certain that there are no leaks in the fusing step; and
Fig. 6 illustrates the drilling of the opening into the polyethylene pipe through the stack.
Fig. 7 shows the preferred excavator with auger attached to excavate to the top of the polyethylene pipe;
Fig. 8 shows the preferred auger with a modification which undercuts or enlarges the diameter of the opening;
Fig. 9 shows the plate which is attached to the bottom flight of the auger to produce the enlarged diameter and clean the excavation just above the polyethylene pipe;
Fig. 10 is a perspective view of the down hole fusing apparatus of the present invention;
Fig. 11 is a perspective view from the bottom of the fusing apparatus of the present invention; and
Fig. 12 is an exploded perspective view of the heating element of the fusing apparatus of the present invention.

### Brief Description of the Preferred Embodiments

The apparatus of the present invention is used in the method for making service connections to polyethylene pipe involving the following steps: (1) locating the service; (2) excavating an opening less than 0.6 m. (about two feet) in diameter from the surface to the polyethylene pipe at the service; (3) introducing a fusing apparatus on top of the polyethylene pipe and fusing a polyethylene stack to the polyethylene pipe; and (4) drilling an opening into the polyethylene pipe through the fused stack. The method may further include testing the polyethylene stack to make certain that there are no leaks in the fusing step between the stack and the polyethylene pipe and that the stack is securely connected to the polyethylene pipe before drilling the opening into the polyethylene pipe. To more particularly point out the details of the fusing step, the sub-steps of step (3) may include (3a) introducing the heating element and supporting structure of the fusing apparatus into the excavation over the polyethylene pipe; (3b) positioning the stack within the supporting structure; (3c) positioning the heating element on the upper surface of the polyethylene pipe and the stack on the upper portion of the heating element to heat the upper surface of the polyethylene pipe and the lower end of the stack; (3d) raising the stack and then the heating element and quickly lowering the stack onto the heated portion of the polyethylene pipe; and applying pressure to the stack until the fusion of the polyethylene stack to the polyethylene pipe is complete.

Currently the two basic methods used to repair existing lines such as broken sewer lines made of concrete or tile with polyethylene pipe are a method called slip lining which is pulling a smaller polyethylene pipe through the existing pipe or methods which break the existing pipe and at the same time pull in a polyethylene pipe. These methods replace broken pipe with polyethylene pipe and are carried out on the city or municipality easements either in front of or behind homes and businesses. In the slip line method, there are no connections to the new polyethylene pipe until the old, existing line is broken and a new connection made. In the methods which break the old sewer pipe, the old connections are also broken. It is now required by the current methods employed to make the new connection, i.e. the connections from a house or business (the line or pipe on private property), in a pit which is 1.5 m to 3.6 m (about 5 feet to 12 feet) deep. Often these pits are in the backyards of person's homes and to allow sufficient room for a man to enter the pit to make the connection by hand, as many as 3.8 to 9.2 Cu. m. (about 5 to 12 cubic yards) of dirt must be removed and stored. The problems of making these new service connections, which are set forth hereinabove, are overcome by the method which will be described in detail with reference to the drawings.

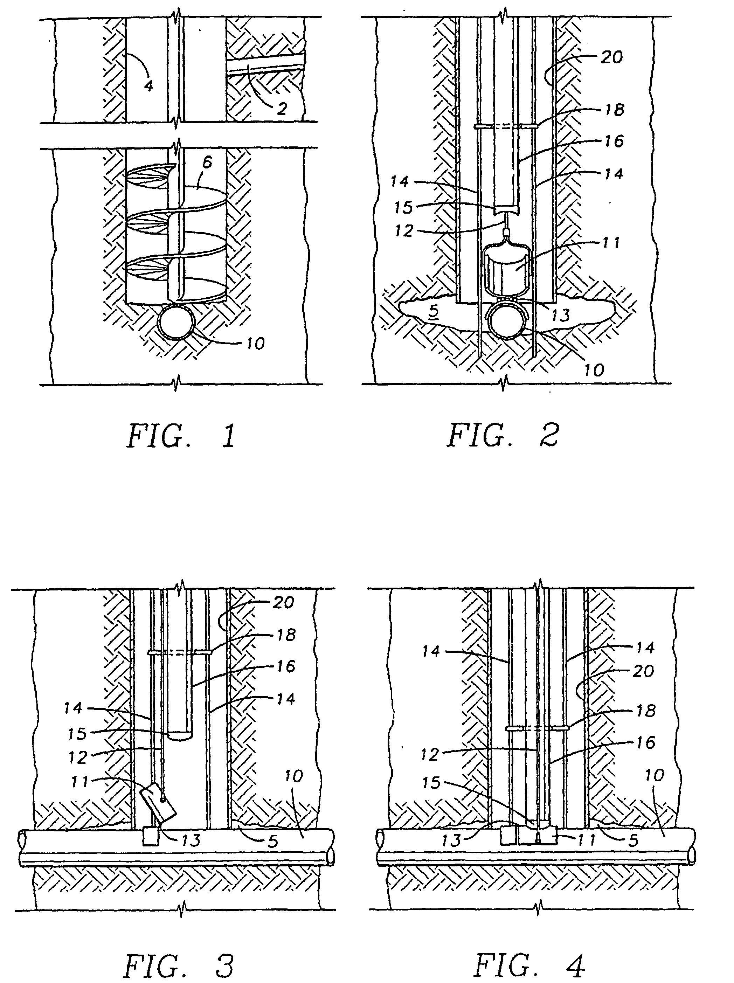

Referring now to Figs. 1 to 6, the method is schematically illustrated and is described in a situation where an old sewer line has been replaced/repaired by a new polyethylene pipe. The service is made with a polyethylene stack. A service 2, which was connected to a broken sewer line and replaced by a new polyethylene pipe 10, is located. For example, if a block of homes has a sewer line running down an easement behind the houses, the replacement polyethylene pipe 10 will replace the old sewer line to which all the homes on two streets having common backyards were connected. In replacing the old sewer line each line or service from each house will be broken, either to make the connection or by the method used to replace the old sewer pipe. A common way of locating each service is televising the broken sewer line before it is replaced with the polyethylene pipe and recording the distance from the starting point of the television camera to each service. Measuring the distances on the surface from the starting point but above and along the old sewer line will locate the services, if televising is not used, then the sewer line coming from each house is located and followed to the intersection of the old sewer line, usually by digging in the backyard after finding the sewer connection at the house. Since sewer systems are gravity flow, the lines or services coming from each house usually start very shallow and drop about one meter (several feet), while the sewer line may be 1.5 m. to 3.6m (about 5 to 12 feet) deep depending on the subdivision. The last portion of the pipe from the private property to the sewer line in the easement is usually a vertical drop.

Fig. 1 illustrates the locating of the service 2 and the excavating of an opening 4 less than two feet in diameter above the polyethylene pipe 10. It is understood that the method is identical in new construction, except locating the service is locating where it is desired to be rather than where it is. The excavation is preferably done with an auger 6 attached to a power unit, which will be described in detail hereinafter. A preferred diameter for the opening 4 is .46m (about 1.5 feet), and if 1.5 m (about five feet) of dirt is removed only a little over 25 cu.m. (about one-third cubic yard) of dirt requires storing and if 3m. (about ten feet) of dirt is removed less than .57cu.m. (about three-quarters 1 cubic yards) need to be handled. In the method of the present invention all operations are carried out from the surface, not requiring anyone to enter the excavation or opening 4. The opening 4 may be directly over the polyethylene pipe 10 or at the 12 o'clock position in relationship to the polyethylene pipe 10 as shown in Fig. 1. However, the opening 4 may be at an angle such that the relationship between the opening 4 and the polyethylene pipe 10 is between the 10 and 2 o'clock positions as shown in Fig. 1. It is preferred that the sides of the opening 4 are at approximately 90° to the polyethylene pipe 10. The space around the pipe 10 needs to be cleaned. One alternative is to provide an enlarged portion or undercut portion to the opening 4 just above the polyethylene pipe 10 which allows space for dirt around the pipe or material, such as broken sewer pipe, to be pushed into. Augers or hand equipment may be available to provide the desired cleaning or an undercut; however, a modification to an auger to carry out this operation will be described hereinafter. After the excavation or opening 4 is complete to the upper surface of the polyethylene pipe 10, the auger 6 is removed and modified, as will be described in greater detail hereinafter, to create an enlarged portion or undercut portion 5, as illustrated in Fig. 2. The dirt and debris around the exposed portion the polyethylene pipe 10 is moved to fully expose at least one-third (1/3) to one-half (1/2) of the polyethylene pipe 10, moving the dirt and debris which is not otherwise removed into the enlarged portion or undercut portion 5. This exposed portion of the surface of the polyethylene pipe 10, exposed to the opening 4, is cleaned. A brush or rag on a pole is used to provide a clean surface on the polyethylene pipe 10 for the fusing of a service connection to the new pipe. The fusing apparatus which includes a heating element 11, schematically illustrated in Fig. 2, is lowered so as to sit on the surface of the polyethylene pipe 10. The heating element 11 is illustrated as being mechanically movable from the upright position shown in Fig. 2 to a position on the surface of the polyethylene pipe 10 by a handle 12, operated from the surface. Alternately, a hydraulic system may be used to raise and lower the heating element 11. The heating element 11 sits on a saddle on the polyethylene pipe 10 which includes a hinge 13. The fusing apparatus also includes a supporting structure 14 for a saddle made of polyethylene or the end of a polyethylene pipe 15 which is at the end of a stack 16. The saddle or end of a polyethylene pipe 15 will be fused to the surface of the polyethylene pipe 10. The stack 16, supported and aligned over the polyethylene pipe 10 by sleeves and/or clamps 18 which are connected to and slidable on the supporting structure 14, is lowered into the opening 4. The clamps 18 may be mechanical, such as a cam which is tightened by pulling a lever upwardly at the surface and releasable by pushing the lever down by a rod from the surface. A preferred clamping system is a hydraulic system which will operate the clamps 18 as well as activate the heating element 11, raising or lowering as desired. The supporting structure 14 may be two or four rods on which the sleeves and/or clamps 18 are attached to align the stack 16 on the polyethylene pipe 10 and lower and raise the stack 16, as will be described in more detail hereinafter.

Referring now to Fig. 3, a side view in relation to the polyethylene pipe 10, also illustrates the step of introducing the fusing apparatus which includes the heating element 11 and the supporting structure 14 for the saddle or end of a polyethylene pipe 15 which is to be fused to the polyethylene pipe 10. Also a casing 20 may be introduced into the opening 4, as illustrated in Fig. 3, to prevent any cave-ins or dirt falling on the exposed polyethylene pipe 10 once the top of the pipe has been cleaned and the debris pushed into the undercut 5. A number of apparatus for fusing a stack 16 can be contemplated; however, a preferred embodiment includes the sleeves and/or clamps 18 supported by the four rods which position or align the stack 16 to the exposed surface of the polyethylene pipe 10 and once aligned the supporting structure 14 is made secure. One way to make the supporting structure 14 secure is to drive the rods into the dirt; however, it is also possible to use the exposed surface of the polyethylene pipe 10 such as using a collar on the pipe 10. The only movement desired is the raising and lowering of the stack 16, making certain there is no rotation of the stack 16 once the stack has been aligned.

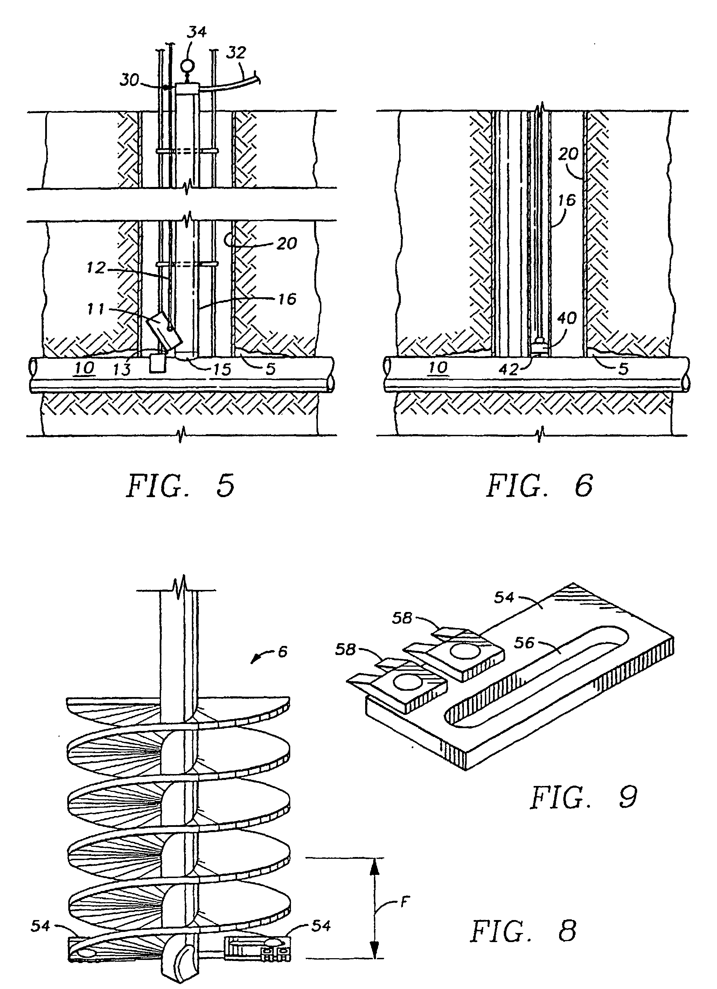

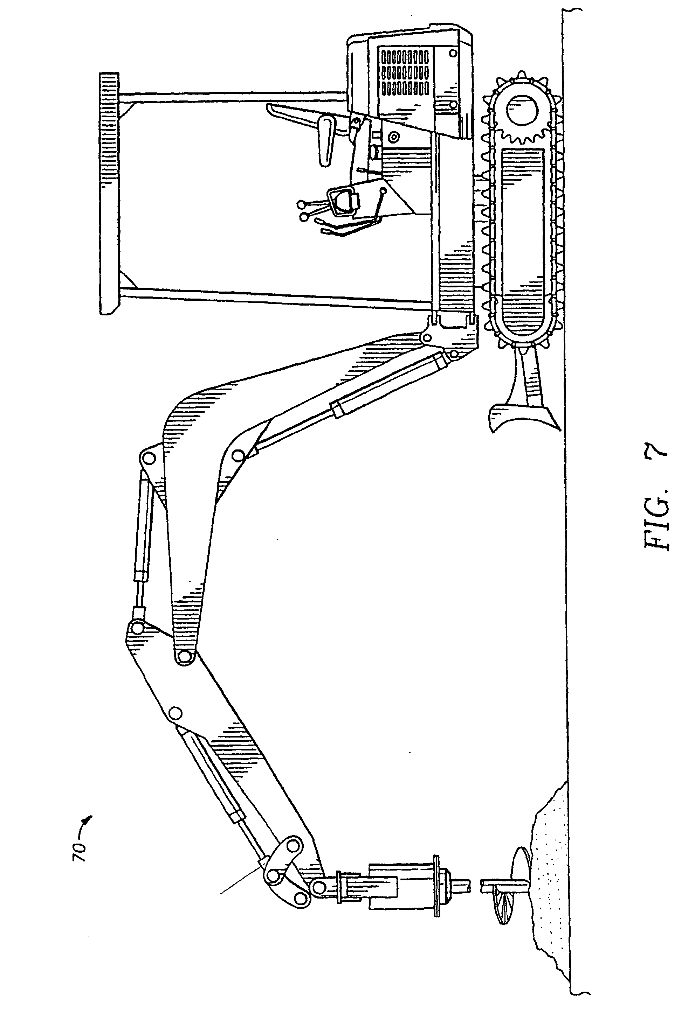

The heating element 11 of the fusing apparatus is lowered as illustrated in Fig. 4 to heat the top surface of the polyethylene pipe 10 and the lower end 15 of the stack 16. The heating surface will have a temperature of about 500° F., the melting temperature of polyethylene. The lower end 15 of the stack 16 is a polyethylene saddle or the end of a polyethylene pipe having a nominal 4" or 6" diameter. The stack 16 may be a polyolefin such as polyethylene, polypropylene, polybutylene or a material such as polyvinylchloride (PVC). It is understood that the materials being fused, i.e. end 15 and pipe 10 are preferably both polyethylene. After heating the top surface of the polyethylene pipe 10 and the lower end 15 of the stack 16 to its molten state, usually less than five minutes, the stack 16 is first raised then the heating element 11 is raised to the positions shown in Fig. 3. The stack 16 is then quickly lowered to contact the top molten surface of the polyethylene pipe 10 where it is held under pressure to fuse the polyethylene end 15 of stack 16 and pipe 10 together, as illustrated in Fig. 5.

After the fusing is complete, which occurs upon the cooling of the molten interface between the end 15 of stack 16 and the top of pipe 10, a plug 30 is placed on the top of the stack 16 to test the fuse. Air is introduced into a line 32 to a pressure of between 3 and 10 psi. If the fuse between the stack 16 and the polyethylene pipe 10 is good the pressure will be maintained as indicated by pressure gauge 34. The test need only hold the pressure for a minute or less to test the fuse.

Only after the fusing of the stack 16 is complete, and preferably tested, is an opening cut into the polyethylene pipe 10. A circular saw 40, having a diameter just less than the internal diameter of the stack 16, so that the saw 40 can rotate and cut a plug from the pipe 10, is introduced through the stack 16 to cut an opening in the polyethylene pipe 10. A screw 42 which extends just below the saw teeth enters the surface and holds the plug cut from the polyethylene pipe 10 and allows the plug to be pulled up with the saw and not dropped into the pipe 10.

Referring now to Fig. 7, the preferred excavator 70 is small enough to be easily placed through a four foot gate in the backyard of a house. The preferred excavator is a Kobota Excavator KX-41 which has a width of less than 42". This machine has the capabilities to use a 15" bucket to locate the service 4 and then power the auger 6. In addition the excavator 70 has power to attach a vacuum or suction system to remove the last amounts of dirt from the top of the polyethylene pipe 10.

The preferred auger for the method of the present invention is illustrated in Fig. 8. The auger 6 may have only two to five flights (a flight being one rotation of the helix or "F" as illustrated in Fig. 8) and as shown is preferably a double helix auger. While this auger will require a number of rotations and removals of the auger in producing the opening 4, the amount of dirt removed is easily handled. The auger 6 is modified when the depth of the opening 4 is within inches above the polyethylene pipe 10. A plate 54, the details shown in Fig. 9, is placed on the bottom surfaces of the lowest flights of the auger 6. The plate 54 is held by a bolt or other attachment device secured to the lower flight of the auger 6 and passing through a slot 56 in each plate 54. Attached to the plate 54 are one or more pair of teeth 58 attached to the cutting edge of the plate 54. As the auger rotates the teeth 58 are caught by the wall of dirt and the plate 54 is pulled outwardly from the auger 6. The rotating plate 54 enlarges the diameter of the opening 4 or provides the undercut portion 5. This attachment may also break up the broken concrete sewer line when used with the slip line method of replacing the polyethylene pipe 10. This attachment is attached to the auger only after the opening 4 has been made to just above the polyethylene pipe 10. The loose dirt which the auger is unable to remove can be removed by a conventional, known suction device (not shown) powered by the excavator 70.

To provide fusing for all the applications where the method of the present invention may be used, a number of sizes or more specifically the surface radius of the heating elements are required. For example, when polyethylene pipe is used in the slip line replacement method, the outer diameter of an SDR21 17.78 cm (7") polyethylene pipe is 18.09 cm. (7.125"); an SDR 21 22.86cm (9") polyethylene pipe is 21.9cm (8.625"); and an SDR21 27.94cm. (11") polyethylene pipe is 27.3cm. (10.750"), which are pulled through an 20.32 cm. (8"), 25.4cm (10") and 30.48cm. (12") broken line, respectively. On the other hand, if the polyethylene pipe is the result of a break in-place method of the broken pipe, an SDR17 20.32cm. (8") polyethylene pipe (O.D. - 21.9cm. (8.625")); an SDR21 25.4cm. (10") polyethylene pipe (O.D. - 27.3cm. (10.750")); or an SDR21 30.48cm. (12") polyethylene pipe (O.D. - 32.38cm. (12.750")) will be used. Since the heating element 11 must have the same radius as that of the outer surface of polyethylene pipe 10, more than one heating element is needed; for example, as many as six to handle the different possible size polyethylene pipe that will be used. It is understood that only one heating element is used with any polyethylene pipe but that size heating element has the same radius as that polyethylene pipe's outside diameter. The end 15 of the stack 16 whether a saddle or the end of a polyethylene pipe will have the same radius as the polyethylene pipe 10 to which it will be fused. For example, a preferred stack is a 10.16 cm (4") SDR17 polyethylene pipe which has an outside diameter (O.D.) of 11.43cm. (4.5") and an inside diameter (I.D.) of 10.08cm. (3.970"). The end of the 10.16cm. (4") pipe is cut to have the same radius as the polyethylene pipe 10 to which it is fused and the desired length provides the stack 16. To the upper end of the 10.16 cm. (4") pipe is inserted a common adapter, known as a Femco adaptor, which connects the 10.16cm. (4") pipe to conventional PVC pipe used in service lines. There are conventional lengths, elbows and pieces to complete the connection to the service line. Other 10.16 cm. (4") polyethylene pipe may be used and stacks may also be made from 15.24 cm (6") pipe.

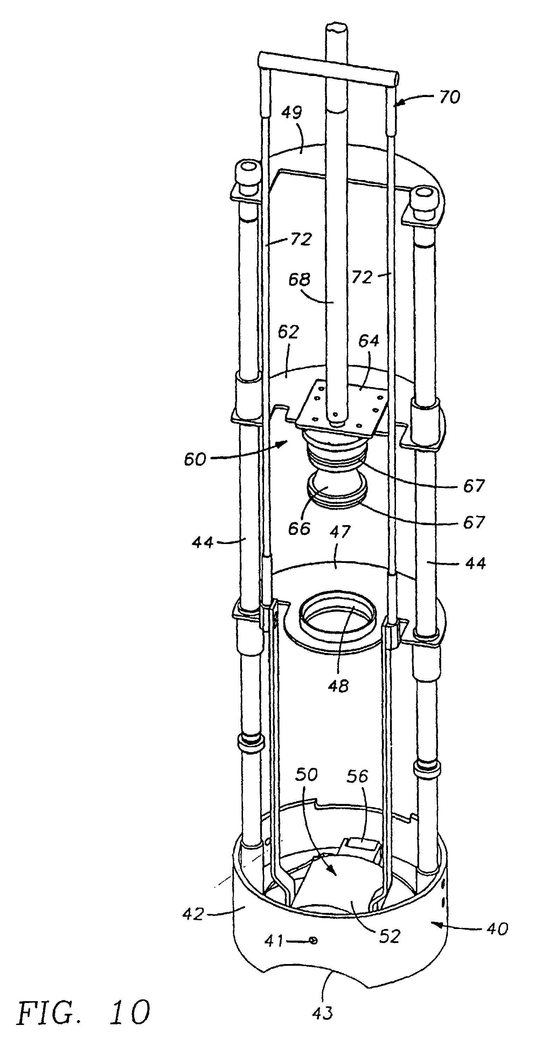

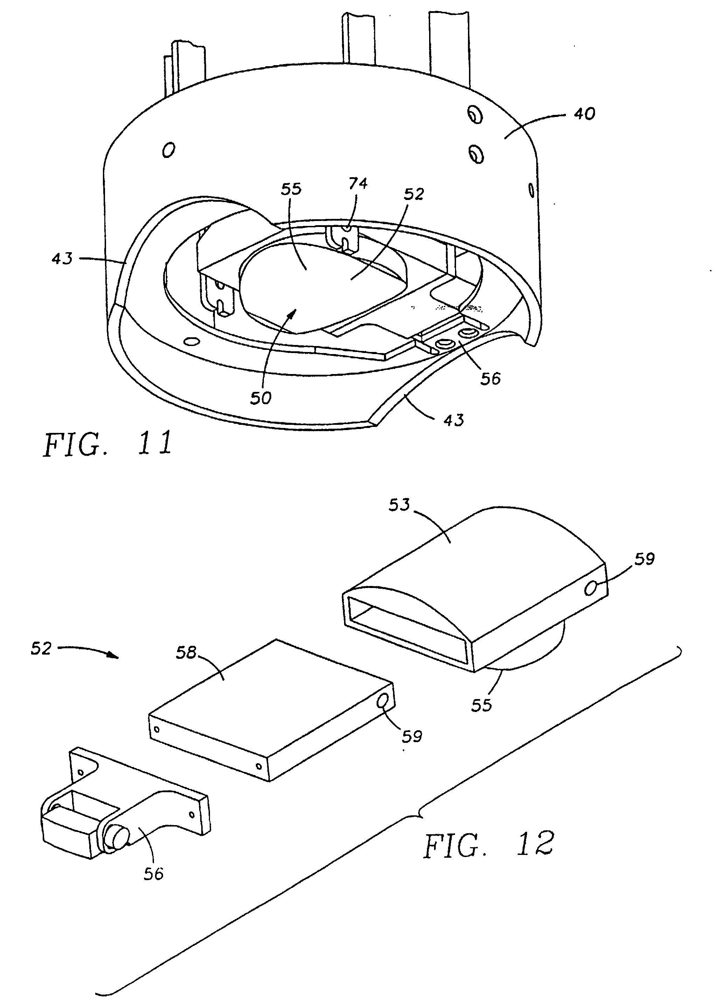

Reference is now made to Fig. 10 which illustrates the preferred embodiment of the apparatus for down hole fusing used in the method heretofore set forth. The apparatus includes a base 40, a heating structure 50, a stack holder 60 and a mechanism 70 to move the iron of the heating structure 50. The base has a base saddle 42 with a radius 43 adapted to seat on the outside surface of polyolefin pipe 10. The base also has at least two adjustable support rods 44 extending from the saddle 42. When the saddle 42 is on the polyolefin pipe 10 the rods 44 are perpendicular to the pipe 10. The rods 44 are in sections so that the total length may be adjustable or the specific dimensions of certain sections may be changed. The heating structure 50 includes a heating iron 52. The heating iron 52 is machined aluminum having an upper surface 53 and lower surface 55 (see Fig. 11). The heating iron 52 is hinged to saddle 42 by a hinge 56. Referring now to exploded view of Fig. 12, the heating iron 52 has a heater 58 containing a plurality of resistor coils which will produce heat when a current is passed through the resistors connected to the hinge 56. The heater 58 slides inside the heating iron 52 and is attached by a screw in aligned threaded openings 59 of the heater 58 and heating iron 52. The axis of the hinge 56 is at a right angle or perpendicular to the axis of the polyolefin pipe 10. The upper surface 53 and the lower surface 55 have essentially the same radius as the outside surface of pipe 10. The stack holder 60 includes a lifting plate 62 which is movable upwardly and downwardly on support rods 44. Attached by a plate 64 is a cylindrical member 66 having a plurality of O-rings 67 around the perimeter which is inserted into the polyethylene stack (not shown, 16 in Fig. 2). The diameter of the O-rings 67 are such that there is sufficient friction when inserted into the stack that the stack is supported on and movable with the member 66 before the stack is fused. A tube 68 is attached to the lifting plate 62 and extends to the surface. By raising and lowering the tube 68 from the surface the stack is moved up and down. The mechanism 70 for moving the heating iron 52 on the hinge 56 is preferably a pair of flat rods 72. The rods 72 are attached on either side of the heating iron by bolts 74.

The down hole fusing apparatus is assembled by attaching sections of support rods 44 to the saddle 42. The radius 43 in the saddle 42 is the same as that of the pipe 10; however, if not, then a plate having the same radius as the pipe 10 (not shown) is bolted to each side of the saddle 43 using bolt openings 41 so that the saddle 43 will seat securely on the pipe 10. The selection of the first sections of support rods 44 is dependent on the height of the stack (16). A centralizing and stabilizing plate 47 is positioned between one-half and three-quarters of the height of the stack but no more than about one foot above the saddle 42. The centralizing and stabilizing plate 47 has an opening 48 with a diameter about that of the stack. This centralizing plate 47 makes certain that the stack is maintained perpendicular to the pipe 10 when in operation. An additional section of support rods 44 are added above plate 48. The lifting plate 62 is slidably mounted on this section of rods 44. The lifting plate 62 has hollow cylinders 69 and an opening in the plate 62 so that the plate 62 slides up and down on rods 44. Enough sections of rods 44 are attached to reach to the surface. At the end of the last section of rods 44, and if desired between a section, is a stabilizing plate 49. The stabilizing plate 49 is to maintain the base sufficiently for the lifting plate 62 to be raised and lowered while maintaining the stack in a perpendicular relationship with the pipe 10. As disclosed herein above, the pipe 10 may be at variable distances from the surface; however, when the down hole fusing apparatus is assembled at the surface the distance to the pipe 10 is known. Also known is the radius of the outer surface of the pipe 10. Accordingly, the heating iron 52 having faces 53 and 55 having essentially the same radius as the pipe 10 is attached to the saddle 42 by hinge 56. Sections of flat rods 72 are assembled, the first section attached to the sides of heating iron 52. A stack is forced on the cylindrical member 66 and the O-rings 67 hold the stack on the lifting plate 62. The end of the stack may rest on the top of heating iron 52 when the down hole fusing apparatus is lowered into position. The procedure for fusing as described herein above is then followed.

## Claims

1. A down hole fusing apparatus for joining a polyolefin stack (15) to a polyolefin pipe (10) which is underground comprising base means which seats on said polyolefin pipe, and stack holder means for positioning a stack (15) with respect to the pipe (10) **characterized by** rods (14) which extend perpendicular to said pipe (10); heating means (11) hinged to said base means, said heating means including a heating iron having an upper surface and a lower surface each having a radius essentially that of the surface of said polyolefin pipe (10); said stack holder means being adapted to position the stack (15) on said heating iron (11) to melt the end of said stack and lower said stack onto the surface of said polyolefin pipe (10) to fuse the stack to said pipe; and means for raising and lowering said heating element from the surface of the ground.

2. The down hole fusing apparatus of claim 1, **characterized in that** said rods (44) extend from said base to a centralizing plate (47) with an opening in said centralizing plate; said stack holder means (60) is movable on rods extending from said centralizing plate (47); and said heating element (50) is hinged to said base (40), said heating element having an upper surface and a lower surface each having a radius essentially that of the surface of said polyolefin pipe.

3. A down hole fusing apparatus according to claim 2, wherein said stack holder means includes a lifting, stabilizing plate (62) which moves on said rods extending from said centralizing plate (47); and a polyolefin stack holder (60) attached to said lifting plate.

4. A down hole fusing apparatus according to claim 2, wherein said means for raising and lowering said heater element are rods (72) connected to each side of said heater element (50).

5. A down hole fusing apparatus according to claim 2, wherein said stack holder means further includes a stack holder (66); and a pipe means (68) for lifting said stack to move said heating element (50) after heating the lower surface of said stack and test the stack after said stack is fused to said polyolefin pipe.

6. A down hole fusing apparatus according to claim 1, **characterized by** extension rods (44) which provide sufficient length to extend to the surface when said base (40) is placed on said polyolefin pipe.

7. A method for making a service connection to polyethylene replacement sewer pipe for connection to a service line which comprises:
(1) locating said service line;
(2) excavating an opening smaller than a man can enter from the surface to the polyethylene replacement pipe at said service line;
**characterized by**
(3) introducing a heat fusing apparatus on top of the polyethylene pipe and fusing a stack to the polyethylene pipe; and
(4) drilling an opening into the polyethylene pipe through the fused stack.

8. A method according to claim 7, **characterized by** before drilling the opening into the polyethylene pipe, testing the stack to make certain that there are no leaks in the fusing step and that the stack is securely connected to the polyethylene pipe.

9. A method according to claim 7, **characterized by** the following steps for step (3):
(3a) introducing a fusing apparatus which includes a heating element and supporting structure;
(3b) positioning the stack within the supporting structure;
(3c) positioning the heating element on the polyethylene pipe and the stack on the upper portion of the heating element to heat the upper surface of the polyethylene pipe and the lower end of the stack;
(3d) raising the stack and then the heating element and quickly lowering the stack onto the heating portion of the polyethylene pipe; and applying pressure to the stack until the fusion of the stack to the polyethylene is complete.

10. A method according to claim 7, **characterized in that** said opening excavated in step 2 is less than two feet in diameter.

## Patentansprüche

1. Bohrloch-Schweißvorrichtung zum Verbinden eines Polyolefinstapels (15) mit einer Polyolefin-Rohrleitung (10), die sich unter der Erdoberfläche befindet, mit einer Basiseinrichtung, die an der genannten Polyolefin-Rohrleitung sitzt, und mit einer Stapelhalteeinrichtung zur Positionierung eines Stapels (15) im Verhältnis zu der Rohrleitung (10), **gekennzeichnet durch** Stangen (14), die sich senkrecht zu der genannten Rohrleitung (10) erstrecken; mit einer Heizeinrichtung (11), die an der genannten Basiseinrichtung aufgehängt ist, wobei die genannte Heizeinrichtung ein Heizeisen mit einer oberen Oberfläche und einer unteren Oberfläche aufweist, die jeweils einen Radius aufweisen, der im wesentlichen dem der Oberfläche der genannten Polyolefin-Rohrleitung (10) entspricht; wobei die genannte Stapelhalteeinrichtung in der Lage ist, den Stapel (15) an dem genannten Heizeisen (11) derart zu positionieren, dass das Ende des genannten Stapels geschmolzen und der genannte Stapel auf die Oberfläche der genannten Polyolefin-Rohrleitung (10) abgesenkt wird, so dass der Stapel mit der genannten Rohrleitung verschweißt wird; und mit einer Einrichtung zum Anheben und Senken des genannten Heizelements von der Oberfläche des Bodens.

2. Bohrloch-Schweißvorrichtung nach Anspruch 1, **dadurch gekennzeichnet, dass** sich die genannten Stangen (44) von der genannten Basis zu einer Zentralisierungsplatte (47) erstrecken, wobei eine Öffnung in der genannten Zentralisierungsplatte (47) vorgesehen ist; wobei die genannte Stapelhalteeinrichtung (60) an den sich von der genannten Zentralisierungsplatte (47) erstreckenden Stangen beweglich ist; und wobei das genannte Heizelement (50) an der genannten Basis (40) aufgehängt ist, wobei das genannte Heizelement eine obere Oberfläche und eine untere Oberfläche aufweist, die jeweils einen Radius aufweisen, der im wesentlichen dem Radius der Oberfläche der genannten Polyolefin-Rohrleitung entspricht.

3. Bohrloch-Schweißvorrichtung nach Anspruch 2, wobei die genannte Stapelhalteeinrichtung eine hebende, stabilisierende Platte (62) aufweist, die sich an den genannten sich von der genannten Zentralisierungsplatte (52) erstreckenden Stangen bewegt; und mit einer Polyolefin-Stapelhalteeinrichtung (60), die an der genannten Hebeplatte angebracht ist.

4. Bohrloch-Schweißvorrichtung nach Anspruch 2, wobei es sich bei der genannten Einrichtung zum Anheben und Senken des genannten Heizelements um Stangen (72) handelt, die mit jeder Seite des genannten Heizelements (50) verbunden sind.

5. Bohrloch-Schweißvorrichtung nach Anspruch 2, wobei die genannte Stapelhalteeinrichtung ferner einen Stapelhalter (66) aufweist; und mit einer Rohrleitungseinrichtung (68) zum Anheben des genannten Stapels, so dass das genannte Heizelement (50) bewegt wird, nachdem die untere Oberfläche des genannten Stapels erhitzt worden ist, und wobei der Stapel geprüft wird, nachdem der genannte Stapel mit der genannten Polyolefin-Rohrleitung verschweißt worden ist.

6. Bohrloch-Schweißvorrichtung nach Anspruch 1, **gekennzeichnet durch** Verlängerungsstangen (44), die eine ausreichende Länge vorsehen, so dass sie sich zu der Oberfläche erstrecken, wenn die genannte Basis (40) an der genannten Polyolefin-Rohrleitung platziert wird.

7. Verfahren zur Herstellung einer Serviceverbindung mit einer Polyethylen-Austausch-Kanalleitung zur Verbindung mit einer Serviceleitung, wobei das Verfahren folgendes umfasst:
(1) Lokalisieren der genannten Serviceleitung;
(2) Graben einer Öffnung, die kleiner ist als eine Öffnung, durch die eine Person von der Oberfläche zu der Polyethylen-Austausch-Rohrleitung an der genannten Serviceleitung eindringen kann;
**gekennzeichnet durch**
(3) Einführen einer Warmverschweißungsvorrichtung auf die Oberseite der Polyethylen-Rohrleitung und Verschweißen eines Stapels mit der Polyethylen-Rohrleitung; und
(4) Bohren einer Öffnung in die Polyethylen-Rohrleitung **durch** den verschweißten Stapel.

8. Verfahren nach Anspruch 7, **dadurch gekennzeichnet, dass** der Stapel vor dem Bohren der Öffnung in die Polyethylen-Rohrleitung geprüft wird, um sicherzustellen, dass während dem Schritt des Verschweißens keine Undichtigkeiten auftreten, und dass der Stapel sicher mit der Polyethylen-Rohrleitung verbunden ist.

9. Verfahren nach Anspruch 7, **gekennzeichnet durch** die folgenden Schritte für den Schritt (3):
(3a) Einführen einer Schweißvorrichtung, die ein Heizelement aufweist und eine Stützstruktur;
(3b) Positionieren des Stapels in der Stützstruktur;
(3c) Positionieren des Heizelements an der Polyethylen-Rohrleitung und des Stapels an dem oberen Teilstück des Heizelements, um die obere Oberfläche der Polyethylen-Rohrleitung und das untere Ende des Stapels zu erwärmen;
(3d) Anheben des Stapels und danach des Heizelements und schnelles Senken des Stapels auf das Heizteilstück der Polyethylen-Rohrleitung; und Ausüben von Druck auf den Stapel, bis die Verschweißung des Stapels mit dem Polyethylen abgeschlossen ist.

10. Verfahren nach Anspruch 7, **dadurch gekennzeichnet, dass** die genannte in dem Schritt 2 gegrabene Öffnung einen Durchmesser aufweist, der kleiner ist als zwei Fuß.

## Revendications

1. Appareil d'association par fusion en fond de sondage destiné au raccordement d'un conduit de polyoléfine (15) à un tube de polyoléfine (10) qui est enterré, comprenant un dispositif de base qui s'appuie sur le tube de polyoléfine, et un dispositif de retenue de conduit destiné à positionner un conduit (15) par rapport au tube (10), **caractérisé par** des tiges (14) qui s'étendent perpendiculairement au tube (10), par un dispositif de chauffage (11) articulé sur le dispositif de base, le dispositif de chauffage comprenant un fer de chauffage ayant une surface supérieure et une surface inférieure ayant chacune un rayon correspondant essentiellement à celui de la surface du tube de polyoléfine (10), le dispositif de retenue de conduit étant destiné à positionner le conduit (15) sur le fer de chauffage (11) afin que l'extrémité du conduit fonde et à abaisser le conduit à la surface du tube de polyoléfine (10) afin que le conduit soit associé par fusion au tube, et par un dispositif destiné à soulever et abaisser l'élément de chauffage depuis la surface du sol.

2. Appareil d'association par fusion en fond de sondage selon la revendication 1, **caractérisé en ce que** les tiges (44) s'étendent de la base vers une plaque (47) de centrage ayant une ouverture dans cette plaque, le dispositif de retenue de conduit (60) étant mobile sur les tiges qui s'étendent depuis la plaque de centrage (47), et l'élément de chauffage (50) est articulé sur la base (40), l'élément de chauffage ayant une surface supérieure et une surface inférieure qui ont chacune un rayon correspondant essentiellement à celui de la surface du tube de polyoléfine.

3. Appareil d'association par fusion en fond de sondage selon la revendication 2, dans lequel le dispositif de retenue de conduit comporte une plaque de stabilisation et de soulèvement (62) qui se déplace sur les tiges qui s'étendent depuis la plaque de centrage (47), et un organe (60) de retenue de conduit de polyoléfine fixé à la plaque de soulèvement.

4. Appareil d'association par fusion en fond de sondage selon la revendication 2, dans lequel le dispositif de soulèvement et d'abaissement de l'élément de chauffage est constitué de tiges (72) raccordées de chaque côté de l'élément de chauffage (50).

5. Appareil d'association par fusion en fond de sondage selon la revendication 2, dans lequel le dispositif de retenue de conduit comporte en outre un organe de retenue de conduit (66), et un dispositif à tube (68) de soulèvement du conduit, afin qu'il déplace l'élément de chauffage (50) après le chauffage de la surface inférieure du conduit et teste le conduit après le conduit a été associé par fusion au tube de polyoléfine.

6. Appareil d'association par fusion en fond de sondage selon la revendication 1, **caractérisé par** des tiges de prolongement (44) qui ont une longueur suffisante pour s'étendre jusqu'à la surface lorsque la base (40) est placée sur le tube de polyoléfine.

7. Procédé de fabrication d'un raccordement de service à un tube d'égout de remplacement de polyéthylène destiné à être raccordé à une canalisation de service, qui comprend :
(1) la localisation de la canalisation de service, et
(2) l'excavation d'une ouverture trop petite pour qu'un homme puisse y pénétrer, depuis la surface et vers le tube de remplacement de polyéthylène au niveau de la canalisation de service,
**caractérisé par**
(3) l'introduction d'un appareil d'association par fusion par chauffage sur la partie supérieure du tube de polyéthylène et l'association par fusion d'un conduit au tube de polyéthylène, et
(4) le perçage d'une ouverture dans le tube de polyéthylène par l'intermédiaire du conduit associé par fusion.

8. Procédé selon la revendication 7, **caractérisé en ce qu'**il comprend, avant le perçage de l'ouverture dans le tube de polyéthylène, l'application de tests au conduit afin qu'il soit certain qu'il n'existe pas de fuite après l'étape d'association par fusion et que le conduit est fermement raccordé au tube de polyéthylène.

9. Procédé selon la revendication 7, **caractérisé en ce qu'**il comprend, pour l'étape (3), les étapes suivantes :
(3a) l'introduction d'un appareil d'association par fusion qui comporte un élément de chauffage et une structure de support,
(3b) le positionnement du conduit dans la structure de support,
(3c) le positionnement de l'élément de chauffage sur le tube de polyéthylène et du conduit sur la partie supérieure de l'élément de chauffage afin que la surface supérieure du tube de polyéthylène et l'extrémité inférieure du conduit soient chauffées,
(3d) le soulèvement du conduit puis de l'élément de chauffage, l'abaissement rapide du conduit sur la partie chauffée du tube de polyéthylène, et l'application d'une pression au conduit jusqu'à ce que l'association par fusion du conduit et du polyéthylène soit complète.

10. Procédé selon la revendication 7, **caractérisé en ce que** l'ouverture formée par excavation dans l'étape (2) a un diamètre inférieur à 61 cm (2 pieds).
